# EUROPÄISCHE PATENTANMELDUNG

(11) **EP 1 813 881 A2**
(43) Veröffentlichungstag der Anmeldung: **01.08.2007**
(21) Anmeldenummer: 07001259.6
(22) Anmeldetag: 20.01.2007
(51) Int. Cl.: F24H 1/26, F24H 9/00

(54) **Wärmetauscher**

(30) Priorität: 25.01.2006 DE 102006003479
(71) Anmelder: ROBERT BOSCH GMBH, 70442 Stuttgart (DE)
(72) Erfinder: Rausch, Rainer, 36304 Alsfeld (DE)

(57) **Zusammenfassung**

Die Erfindung betrifft einen Wärmetauscher, insbesondere aus einem einstückigen Gusskörper, zur Verwendung bei einem Heizgerät für den Wärmeaustausch zwischen Heizgasen und umgebendem Heizwasser, bestehend aus einer Brennkammer (1) mit Anschlussmöglichkeit für einen Gas- oder Ölbrenner, einer Heizgasführung (2) sowie einem Abgasaustritt (3), mit oberflächenvergrößernden Elementen (4) an den heizgasberührten und / oder wasserberührten Wandseiten, wobei die Anschlüsse für Brenner und Abgasleitung auf der Vorderseite (5) liegen, diese Seite in Form eines Flansches ausgebildet und einer Aufnahme an einem Heizkessel oder Heizwasserspeicher zugeordnet ist.

Der Erfindung liegt die Aufgabe zugrunde, einen Wärmetauscher zu schaffen, der bei möglichst kompakten Abmessungen gute Wärmeübertragungseigenschaften besitzt und gut zu reinigen ist.

Der konstruktive Aufbau des Wärmetauschers ist dadurch gekennzeichnet, dass auf der Wasserseite des Wärmetauschers mindestens ein vertikaler Kanal oder Einschnitt (6) ausgebildet ist, der die Heizgasführung (2) in mindestens zwei Heizgaszüge (2') aufteilt.

## Beschreibung

Die Erfindung betrifft einen Wärmetauscher, insbesondere aus einem einstückigen Gusskörper, nach dem Oberbegriff des Patentanspruches 1.

Gattungsgemäße Wärmetauscher aus Grauguss oder Aluminium werden bei Heizgeräten für den Wärmeaustausch zwischen den Heizgasen und dem Heizwasser eingesetzt. Hinsichtlich der heizwasserseitigen Strömungsführung unterscheidet man zwischen zwangsdurchströmten und nicht zwangsdurchströmten Wärmetauschern. Bei zwangsdurchströmten Wärmetauschern sorgt eine Umwälzpumpe für einen vorgegebenen Wasservolumenstrom durch die zumeist engen, mäanderförmig angelegten Wasserkanäle. Auf diese Weise sind trotz geringen Wasserinhaltes recht hohe, heizgasseitig eingetragene Wärmestromdichten realisierbar. Bei nicht zwangsdurchströmten Wärmetauschern ist der Heizwasserinhalt deutlich größer, gleichzeitig sind die realisierbaren Wärmestromdichten in der Regel niedriger. Die Wasserführung erfolgt nicht in engen geschlossenen Kanälen, sondern über oberflächenvergrößernde Wärmeleitelemente, beispielsweise in Rippenform, in vergleichsweise groß bemessenen Querschnitten und basiert auf thermischer Konvektion.

Ausgehend von einem beispielsweise ruhenden Kessel- oder Speicherwasserinhalt wird bei heizgasseitiger Beheizung des Wärmetauschers das den Wärmetauscher berührende Wasser durch Wärmeleitung erwärmt. Aufgrund des thermischen Auftriebs kommt allmählich eine Strömungswalze auf der Wasserseite in Gang, die das erwärmte Wasser nach oben abführt und weiteres zu erwärmendes Wasser von unten an die heiße Wärmetauscheroberfläche heranführt.

Bei der konstruktiven Auslegung eines solchen Wärmetauschers müssen die Wärmeleistung des Wärmeerzeugers sowie die heizgasseitigen und wasserseitigen Wärmetauscherflächen in einem bestimmten Verhältnis zu einander stehen. Einerseits muss der Wärmestrom der Heizgase bis herab zu einer Auslegungstemperatur auf den Wärmetauscher übertragen werden, andererseits muss der Wärmetauscher denselben Wärmestrom an das umgebende Heizwasser abgeben können. Sind diese drei Größen nicht auf einander abgestimmt, so kann das dazu führen, dass entweder die Abgassolltemperatur nicht erreicht wird - was sich in erhöhten Abgasverlusten bemerkbar macht -, oder dass die Übertemperatur des Wärmetauschers gegenüber dem umgebenden Heizwasser zu lokalem Sieden führt. Unerwünschte Siedegeräusche, Materialschädigungen und / oder Ablagerungen sind dann die Folge.

Aus Gründen eines kompakten Aufbaus ist man bestrebt, die für die Wärmeübertragung erforderliche Wärmetauscherflächen mit Hilfe von oberflächenvergrößernden Elementen, z.B. in Rippenform, unterzubringen. Hierfür steht bei herkömmlichen Ausführungen lediglich die einfache Mantelfläche des Wärmetauschers als Basisfläche für die hervorspringenden Wärmeleitrippen zur Verfügung.

Die DE 102 46 259 B3 zeigt den Wärmetauscher eines direkt beheizten Pufferspeichers, dessen Vorderseite mit Hilfe seines Flanschdeckels an einem Befestigungsflansch des Speichers montierbar ist. Die Heizgase werden aufgrund eines von einem Gebläse aufgeprägten Druckgefälles von der Brennkammer über den Abgaswärmetauscher zur Abgasführung geleitet. Wasserseitig ist der nicht zwangsdurchströmte Wärmetauscher im Speicherwasser eingetaucht. Ein solcher Wärmetauscher ist in ähnlicher Bauweise auch in einem Heizkessel einsetzbar. Die kompakte Baugruppe wird durch ein im Wesentlichen U-förmig gestaltetes Rohr gebildet, bei dem die Brennkammer im oberen Schenkel und der Abgaswärmetauscher in der U-Krümmung sowie im unteren Schenkel angeordnet ist, wobei die beiden Schenkel des Rohres durch einen horizontalen Zwischenraum voneinander getrennt sind. Dies erlaubt eine vollständige Umspülung der Brennkammer durch das Speichermedium. Durch die relativ große Schenkellänge ist die mechanische Reinigung des Abgasweges erschwert.

Der Erfindung liegt die Aufgabe zugrunde, einen Wärmetauscher, insbesondere aus einem einstückigen Gusskörper, zur Verwendung in einem Heizgerät für den Wärmeaustausch zwischen Heizgasen und Heizwasser zu schaffen, welcher bei möglichst kompakten Abmessungen gute Wärmeübertragungseigenschaften besitzt und gut zu reinigen ist.

Erfindungsgemäß wird dies mit den Merkmalen des Patentanspruches 1 gelöst. Vorteilhafte Weiterbildungen sind den Unteransprüchen zu entnehmen.

Der konstruktive Aufbau des Wärmetauschers ist dadurch gekennzeichnet, dass auf der Wasserseite des Wärmetauschers mindestens ein vertikaler Kanal oder Einschnitt ausgebildet ist, der die Heizgasführung in mindestens zwei Züge aufteilt. Dieser Kanal ist in einem ersten Ausführungsbeispiel zentral im Wärmetauscher angeordnet. Lediglich nach oben und unten steht er in Verbindung zum umgebenden Heizwasserraum. Dabei weist er einen im Wesentlichen runden Querschnitt auf. In einem zweiten Ausführungsbeispiel steht der Kanal nach oben und unten sowie zur Rückseite hin in Verbindung zum umgebenden Heizwasserraum und ist als rückseitiger Einschnitt ausgebildet. In beiden Ausführungsformen kann der Kanal zur weiteren Vergrößerung der Wärmetauscherfläche wahlweise mit oberflächenvergrößernden Elementen wie Rippen oder Nägeln versehen sein. Aufgrund des allseitigen Wärmeeintrags erwärmt sich das im Kanal befindliche Heizwasser besonders schnell. Die sich einstellenden Dichteunterschiede gegenüber dem umgebenden Wasserraum führen zu thermischem Auftrieb des erwärmten Wassers und Nachströmen von kühlerem Wasser von unten mit Ausbildung einer konvektiven Strömungswalze. Zur Unterstützung von Auftriebsströmung und Wärmeübertragung kann der Kanal eine strömungsgünstige Kontur erhalten, indem der Zuströmquerschnitt zum Beispiel düsen-ähnlich ausgebildet ist. Damit sich die Auftriebsströmung im Konvektionskanal im erwünschten Umfang einstellt, ist es erforderlich, dass die vertikale Erstreckung des Kanals mindestens den oberen Wärmetauscherbereich überdeckt und so eine ausreichende Anschubstrecke für die thermische Konvektion bildet. Mit zunehmender vertikaler Erstreckung verbessert sich auch die Wirkung der Strömungsführung. Ferner ist es vorteilhaft, dass das rücklaufende Heizwasser des Heizgerätes vorzugsweise im Zuströmbereich unterhalb des Wärmetauschers eingespeist wird und damit die natürliche Temperaturschichtung wie auch die Ausbildung der Strömungswalze im Heizgerät unterstützt. Das kühle Rücklaufwasser wird auf kurzem Weg in den Konvektionskanal hineingesaugt.

Die Heizgasführung im Inneren des Wärmetauschers ist in mindestens zwei parallel durchströmte Züge geteilt, die sich bis in die den Kanal rechts und links begrenzenden Wände fortsetzen. Da Brenner und Abgasaustritt auf der Vorderseite des in den Wasserraum eingetauchten Wärmetauschers angeordnet sind, ist die Heizgasführung zweizügig in U-Form, vierzügig in W-Form oder höherzügig darstellbar, wobei die Strömung von dem oben gelegenen Brennraum in Richtung des darunter liegenden Abgasaustritts führt. Die Brennkammer sowie die einzelnen Heizgaszüge weisen eine leicht abschüssige Neigung auf, wodurch ein Ablaufen von anfallendem Kondensat in Richtung des Abgasaustritts gewährleistet ist. Bei W-förmiger Heizgasführung kann auf der Wasserseite des Wärmetauschers mindestens ein horizontaler Einschnitt vorgesehen sein, der auf der Heizgasseite strömungsbegrenzende oder strömungsumlenkende Wände bildet. Darüberhinaus können in den Heizgaszügen weitere Strömungsleitelemente angeordnet sein. Beim Durchströmen der Heizgaszüge kühlen die Heizgase kontinuierlich ab und verlieren daher an Volumen.

Um die Strömungsgeschwindigkeiten dennoch über die gesamte Zuglänge konstant zu halten, kann der freie heizgasseitige Querschnitt in Strömungsrichtung entsprechend des Temperaturverlaufs reduziert werden.

Für die heizgasseitige Reinigung des Wärmetauschers muss dieser für Bürsten, Bleche oder Wasserstrahlen zugängig sein. Für diesen Zweck kann auf der Vorderseite zwischen Brenneranschluss und Abgasaustritt eine Reinigungsöffnung mit zugehörigem, abnehmbarem Deckel vorgesehen werden. Eine andere Ausführungsform besteht darin, die ganze Vorderseite mit einer einzigen Tür zu verschließen, die dann zur Aufnahme von Brenner und / oder Abgasanschluss und / oder zum Verdecken einer Reinigungsöffnung vorgesehen ist.

Mit der erfindungsgemäßen Gestaltung wird ein Wärmetauscher vorgestellt, der bei möglichst kompakten Abmessungen gute Wärmeübertragungseigenschaften besitzt und gut zu reinigen ist.

Die Zeichnungen stellen Ausführungsbeispiele der Erfindung dar. Es zeigt:

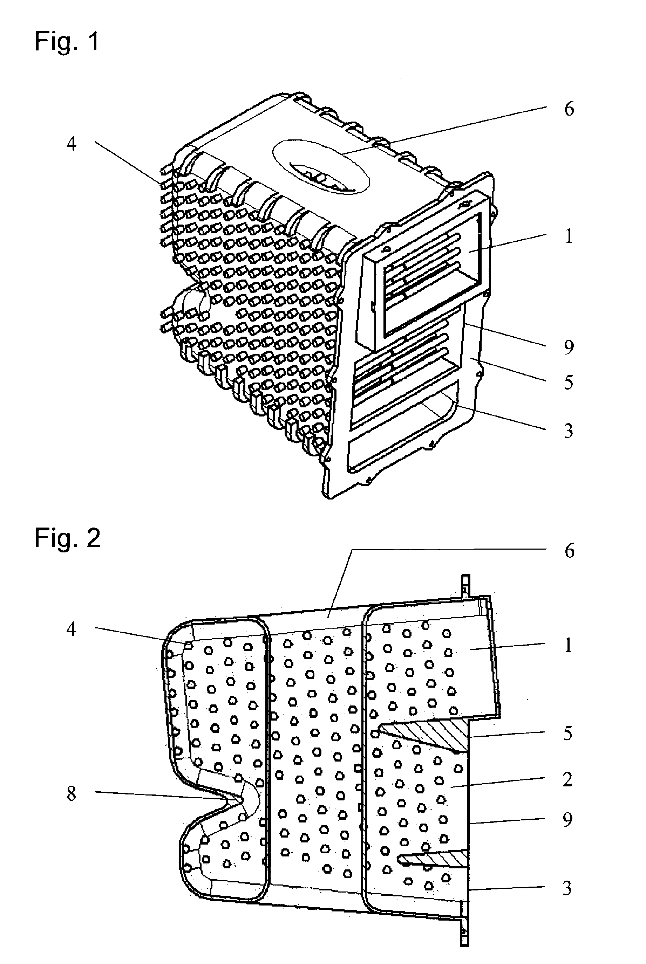

- Fig. 1:: Eine perspektivische Ansicht eines Wärmetauschers von schräg vorn mit einem vertikalen, zentral im Wärmetauscher angeordneten Kanal,
- Fig. 2:: einen vertikalen Schnitt durch den Wärmetauscher aus Fig. 1,

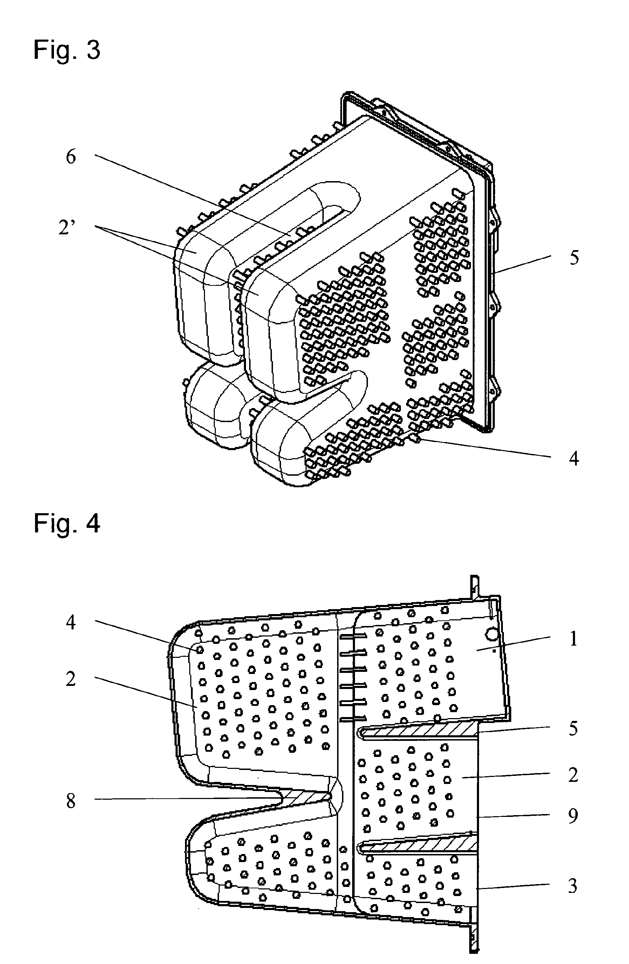

- Fig. 3:: eine perspektivische Ansicht des Wärmetauschers von schräg hinten mit einem rückseitigen Einschnitt,
- Fig. 4:: einen vertikalen Schnitt durch den Wärmetauscher gemäß Fig. 3 in der Ebene eines Heizgaszuges und
- Fig. 5:: eine Einbausituation des Wärmetauschers mit schematischer Anordnung des Rücklaufrohres unterhalb des Wärmetauschers.

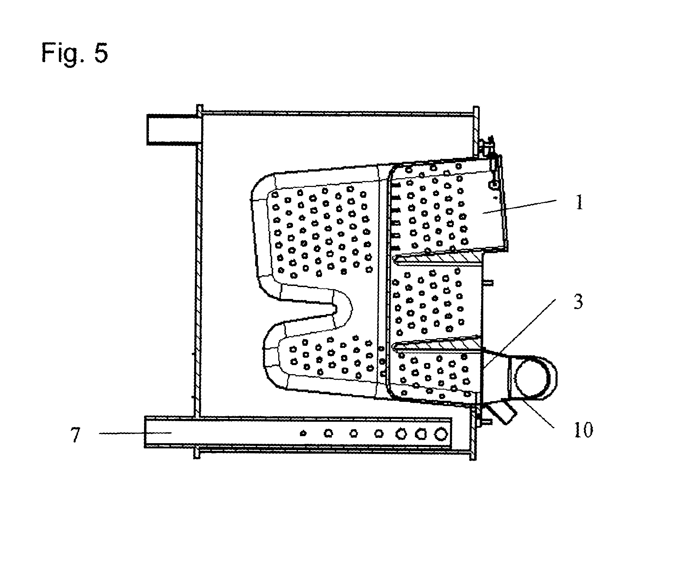

Der Wärmetauscher besteht aus der Brennkammer 1, der Heizgasführung 2 mit den Heizgaszügen 2', dem Abgasaustritt 3 und den oberflächenvergrößernden Elementen 4. Brennkammer 1 und Abgasaustritt 3 sind von der Vorderseite 5 zugängig. Der Wärmetauscher ist auf seiner Wasserseite durch einen vertikalen Kanal oder Einschnitt 6 gekennzeichnet. Das Einspeiserohr 7 des Heizungswasserrücklaufs befindet sich unter dem Wärmetauscher in dessen Zuströmbereich, und dessen Austrittsöffnungen gewährleisten ein optimales Anströmen des Wärmetauschers mit kühlem Rücklaufwasser. Ein horizontaler Einschnitt auf der Wasserseite bildet auf der Heizgasseite strömungsumlenkende Wände 8. Auf der Vorderseite 5 befindet sich eine Reinigungsöffnung 9 und der Abgasaustritt 3, der in die in Fig. 5 dargestellte Abgasleitung 10 mündet.

## Patentansprüche

1. Wärmetauscher, insbesondere aus einem einstückigen Gusskörper, zur Verwendung bei einem Heizgerät für den Wärmeaustausch zwischen Heizgasen und umgebendem Heizwasser, bestehend aus einer Brennkammer (1) mit Anschlussmöglichkeit für einen Gas- oder Ölbrenner, einer Heizgasführung (2) sowie einem Abgasaustritt (3), mit oberflächenvergrößernden Elementen (4) an den heizgasberührten und / oder wasserberührten Wandseiten, wobei die Anschlüsse für Brenner und Abgasleitung auf der Vorderseite (5) liegen, diese Seite in Form eines Flansches ausgebildet und einer Aufnahme an einem Heizkessel oder Heizwasserspeicher zugeordnet ist,
**dadurch gekennzeichnet, dass** auf der Wasserseite des Wärmetauschers mindestens ein vertikaler Kanal oder Einschnitt (6) ausgebildet ist, der die Heizgasführung (2) in mindestens zwei Heizgaszüge (2') aufteilt.

2. Wärmetauscher nach Anspruch 1,
**dadurch gekennzeichnet, dass** der Kanal (6) zentral im Wärmetauscher angeordnet ist, lediglich nach oben und unten in Verbindung zum umgebenden Heizwasserraum steht und einen im Wesentlichen runden Querschnitt aufweist.

3. Wärmetauscher nach Anspruch 1,
**dadurch gekennzeichnet, dass** der Kanal (6) nach oben und unten sowie zur Rückseite hin in Verbindung zum umgebenden Heizwasserraum steht und als rückseitiger Einschnitt ausgebildet ist.

4. Wärmetauscher nach einem der Ansprüche 1 bis 3,
**dadurch gekennzeichnet, dass** der Kanal (6) mit oberflächenvergrößernden Elementen (4) versehen ist.

5. Wärmetauscher nach einem der Ansprüche 1 bis 4,
**dadurch gekennzeichnet, dass** dem Kanal (6) an seiner Unterseite ein Einspeiserohr (7) für rücklaufendes Heizwasser zugeordnet ist, wobei die Austrittsöffnungen des Einspeiserohrs mit dem Zuströmbereich des Kanals korrespondieren.

6. Wärmetauscher nach einem der Ansprüche 1 bis 5,
**dadurch gekennzeichnet, dass** die Heizgasführung (2) im Inneren des Wärmetauschers in mindestens zwei parallel durchströmte Heizgaszüge (2') geteilt ist, die sich taschenartig am der Brennkammer gegenüberliegenden Ende in den Wasserraum erstrecken.

7. Wärmetauscher nach einem der Ansprüche 1 bis 6,
**dadurch gekennzeichnet, dass** die Heizgasführung (2) zwischen Brennkammer (1) und Abgasaustritt (3) einen im Wesentlichen W-förmigen, von oben nach unten durchströmten Verlauf aufweist.

8. Wärmetauscher nach einem der Ansprüche 1 bis 7,
**dadurch gekennzeichnet, dass** die Brennkammer (1) und die einzelnen Heizgaszüge (2') eine abschüssige Neigung aufweisen, die ein Ablaufen von anfallendem Kondensat in Richtung des Abgasaustritts (3) gewährleistet.

9. Wärmetauscher nach einem der Ansprüche 1 bis 8,
**dadurch gekennzeichnet, dass** auf der Wasserseite des Wärmetauschers mindestens ein horizontaler Einschnitt vorgesehen ist, der auf der Heizgasseite strömungsbegrenzende oder strömungsumlenkende Wände (8) bildet.

10. Wärmetauscher nach einem der Ansprüche 1 bis 9,
**dadurch gekennzeichnet, dass** in den Heizgaszügen (2') Strömungsleitelemente angeordnet sind.

11. Wärmetauscher nach einem der Ansprüche 1 bis 10,
**dadurch gekennzeichnet, dass** der freie heizgasseitige Querschnitt in Strömungsrichtung entsprechend des Temperaturverlaufs abnimmt.

12. Wärmetauscher nach einem der Ansprüche 1 bis 11,
**dadurch gekennzeichnet, dass** auf der Vorderseite (5) zwischen Brenneranschluss und Abgasaustritt (3) eine Reinigungsöffnung (9) mit zugehörigem, abnehmbarem Deckel vorgesehen ist.

13. Wärmetauscher nach einem der Ansprüche 1 bis 12,
**dadurch gekennzeichnet, dass** die Vorderseite (5) von einer einzigen Tür verschlossen ist, die zur Aufnahme von Brenner und / oder Abgasanschluss und / oder zum Verdecken einer Reinigungsöffnung (9) vorgesehen ist.
